# EUROPEAN PATENT SPECIFICATION

(11) **EP 4 101 260 B1**
(45) Date of publication and mention of the grant of the patent: **28.01.2026**
(21) Application number: 21709213.9
(22) Date of filing: 04.02.2021
(51) Int. Cl.: H05B 1/02, H05B 3/84, B64D 15/12

(54) **SYSTEM AND METHOD FOR LIFE PREDICTION OF A RESISTIVE COATING**
SYSTEM UND VERFAHREN ZUR VORHERSAGE DER LEBENSDAUER EINER RESISTIVEN BESCHICHTUNG
SYSTÈME ET MÉTHODE DE PRÉDICTION DE LA DURÉE DE VIE D'UN REVÊTEMENT RÉSISTIF

(30) Priority: 06.02.2020 US 202062970834 P
(43) Date of publication of application: 14.12.2022
(73) Proprietor: PPG Industries Ohio Inc., Cleveland, OH 44111 (US)
(72) Inventor: FRANCOIS, Emmanuel C., Madison, Alabama 35756 (US)
(74) Representative: f & e patent
(86) International application number: PCT/US2021/016574
(87) International publication number: WO 2021/158763

(56) References cited:
- EP-A2- 2 879 951
- US-A1- 2003 078 741
- US-B2- 10 063 047

## Description

### FIELD OF THE INVENTION

This disclosure relates to systems and methods for monitoring a condition of an article comprising a resistive coating based on changes in electrical resistance of the coating over time.

### BACKGROUND OF THE INVENTION

Windshields and windows, such as windows of buildings or vehicles, may include defogging/deicing systems for heating surfaces of transparencies of the windshields and windows to remove moisture and to improve visibility. Such defogging/deicing systems can include transparent or semi-transparent conductive and/or resistive coatings or films electrically connected to a heater controller and/or power supply and configured to produce heat when electrical current passes through the coating or film.

A variety of different materials are known for producing such transparent resistive coatings, which can be used with window heating systems. Some windows include a thin film of a conductive metal oxide, such as indium tin oxide (ITO). ITO may be formed on a substrate by sputtering from a target. The target can be stationary relative to the substrate during the sputtering or can move across a surface of the substrate according to a predetermined pattern.

In order to apply power to a conductive (e.g., ITO) coating, the coating can be electrically connected to the power supply through a heating arrangement including bus bars and wire leads. The power supply can be a DC power supply or an AC power supply. Following prolonged use (e.g., prolonged exposure to the electrical current) or due to damage, such as damage caused by impacts with the coating or transparency of the window or windshield, the resistive coatings can deteriorate or degrade. The transparency should be repaired or replaced once the coating deteriorates or degrades beyond acceptable limits. Continued use of a transparency with a degraded coating can cause the coating and/or transparency to crack or break, which can cause an emergency situation.

EP 2 897 951 A2 discloses a system for predicting remaining usable life of a mounted window in an aircraft comprising a resistive coating.

US 10 063 047 B2 discloses a system for monitoring crack of heated windows (with a conductive coating) of aircraft based on resistance measurement of a conductive strip mounted over the conductive coating.

### SUMMARY OF THE INVENTION

The present invention relates to a system for predicting remaining usable life of an article comprising a resistive coating, which comprises computer-readable memory comprising a linear model predicting changes in resistance of the resistive coating over time determined based on a plurality of past resistance measurements for the resistive coating and a processor electrically connected to the computer readable memory. The processor is configured to: receive and process data representative of a sensed electrical property of the resistive coating from a measurement sensor electrically connected to the resistive coating to determine a present resistance value for the coating; receive information about a present age of the article and/or coating; and determine an estimated remaining usable life of the article by applying the received information about the present age of the coating and/or article, the determined present resistance value for the coating, and a predetermined end-of-use resistance value for the coating to the linear model of the computer-readable memory.

The present invention can also relate to a system for monitoring a condition of an article comprising a resistive coating, which comprises: a measurement sensor electrically connected to the resistive coating of the article configured to sense an electrical property of the resistive coating; computer-readable memory comprising a linear model predicting changes in resistance of the coating over time determined based on past resistance measurements for the resistive coating; and a processor electrically connected to the measurement sensor and the computer-readable memory. The processor is configured to: receive information about a present age of the article and/or resistive coating; receive the sensed electrical property of the resistive coating from the measurement sensor; determine a present resistance value of the resistive coating based on the received sensed electrical property; update the linear model based on the determined present resistance value and the received information about the present age of the article and/or coating; evaluate a present condition of the resistive coating by applying the determined present resistance value and a predetermined end-of-use resistance value to the updated linear model of resistance change for the article; and determine an estimated remaining usable life of the article based on the evaluated present condition of the resistive coating.

The present invention can also relate to a windshield heating system for a vehicle. The windshield heating system comprises: a transparency; a resistive coating on a portion of the transparency configured to generate heat when an electrical current is applied to the resistive coating; a power supply connected to the resistive coating configured to generate the electrical current that heats the resistive coating; a measurement sensor electrically connected to the resistive coating configured to sense an electrical property of the resistive coating when the electrical current is applied to the resistive coating; and a processor. The processor is electrically connected to the power supply and to the measurement sensor. The processor is configured to: cause the power supply to apply the electrical current from the power supply to the resistive coating; receive data representative of the sensed electrical property of the resistive coating from the measurement sensor as the electrical current is applied to the resistive coating; determine a present resistance value of the resistive coating based on the received sensed electrical property; evaluate a present condition of the resistive coating by applying the determined present resistance value and a predetermined end-of-use resistance value to a linear model predicting changes in resistance of the resistive coating over time determined based on historical resistance measurements for the resistive coating; and determine an estimated remaining usable life of the transparency based on the evaluated present condition of the resistive coating.

The present invention can also relate to a method of monitoring a condition of a transparency. The method comprises: sensing an electrical property of a resistive coating of the transparency with a measurement sensor; determining, with a processor, a present resistance value of the resistive coating based on data representative of the sensed electrical property obtained by the measurement sensor; updating a linear model of resistance change of the resistive coating over time for the transparency based on the determined present resistance value and a present age of the coating; and evaluating the present condition of the resistive coating by applying the determined present resistance value and a predetermined end-of-use resistance value to the updated linear model of resistance change for the resistive coating. The method further comprises determining an estimated remaining usable life of the resistive coating based on the evaluation of the evaluated present condition of the resistive coating.

### BRIEF DESCRIPTION OF THE DRAWINGS

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only, and are not intended as a definition of the limit of the invention.

Further features and other examples and advantages will become apparent from the following detailed description made with reference to the drawings in which:
FIG. 1 is a schematic drawing of an aircraft including a windshield and passenger windows including a resistive coating and a system for monitoring a condition of the resistive coating;
FIG. 2A is a top view of a transparency including a resistive coating to be used with a system for monitoring a condition of the coating;
FIG. 2B is a cross-sectional view of the transparency of FIG. 2A taken along line 2B-2B;
FIG. 3 is a schematic drawing of heating systems for the transparency and resistive coating of FIGS. 2A and 2B;
FIG. 4 is a schematic drawing of a monitoring system for the transparency and resistive coating of FIGS. 2A and 2B;
FIG. 5 is a flow chart showing a process for creating a life prediction model for a coated transparency;
FIG. 6A is a graph showing a plurality of data points for measured electrical current (e.g., 1/resistance) for a resistive coating over time and a regression line produced by a linearization algorithm;
FIGS. 6B and 6C are graphs showing how the regression line produced by the linearization algorithm is generated;
FIG. 6D is a graph showing an impact of temperature on resistance of a resistive coating;
FIG. 7 is a flow chart showing a process for determining an estimated remaining usable life of a transparency by applying the life prediction model to measured data for the transparency; and
FIG. 8 is a flow chart showing a process for updating the life prediction model based on additional resistance data to determine an updated estimated remaining usable life for a transparency.

### DETAILED DESCRIPTION OF THE INVENTION

As used herein, the terms "right", "left", "top", "bottom", and derivatives thereof shall relate to the invention as it is oriented in the drawing figures. However, for purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth, the broad scope of the invention are approximations, the numerical values set forth in the specific examples are reported as precisely as possible. Any numerical value, however, inherently contains certain errors necessarily resulting from the standard deviation found in their respective testing measurements.

Also, it should be understood that any numerical range recited herein is intended to include all sub-ranges included therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

In addition, in this application, the use of "or" means "and/or" unless specifically stated otherwise, even though "and/or" may be explicitly used in certain instances. In this application, the use of the singular includes the plural and plural encompasses singular, unless specifically stated otherwise. Further, as used herein, the singular form of "a", "an", and "the" include plural referents unless the context clearly dictates otherwise. For example, although the invention is described herein in terms of "a" resistive coating, "a" processor, or "a" measuring device, one or more of any of these components or any other components recited herein can be used within the scope of the present disclosure.

As used herein, the terms "communication" and "communicate" refer to the receipt or transfer of one or more signals, messages, commands, or other type of data. For one unit or component to be in communication with another unit or component means that the one unit or component is able to directly or indirectly receive data from and/or transmit data to the other unit or component. This can refer to a direct or indirect connection that can be wired and/or wireless in nature. Additionally, two units or components can be in communication with each other even though the data transmitted can be modified, processed, routed, and the like, between the first and second unit or component. For example, a first unit can be in communication with a second unit even though the first unit passively receives data, and does not actively transmit data to the second unit. As another example, a first unit can be in communication with a second unit if an intermediary unit processes data from one unit and transmits processed data to the second unit. It will be appreciated that numerous other arrangements are also possible.

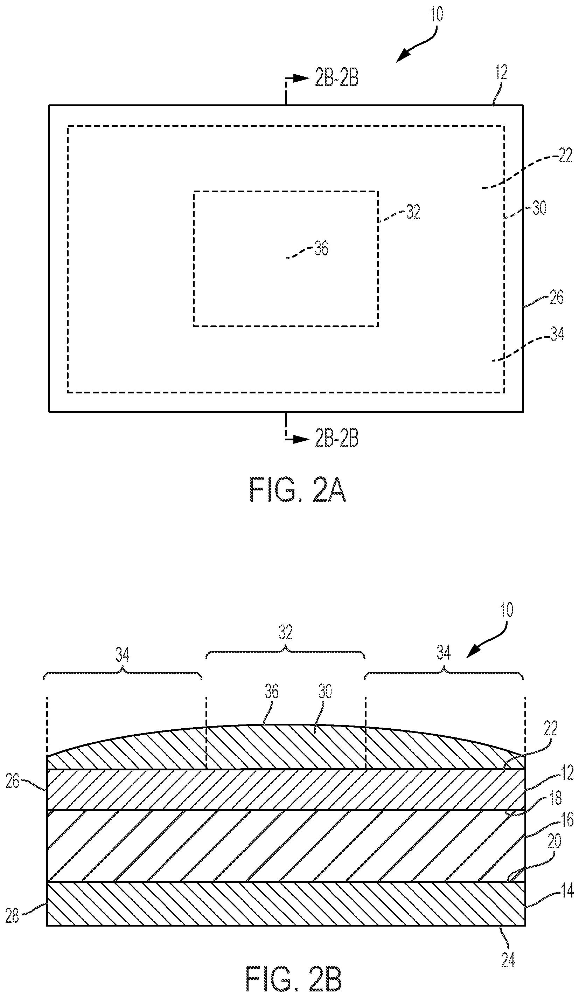

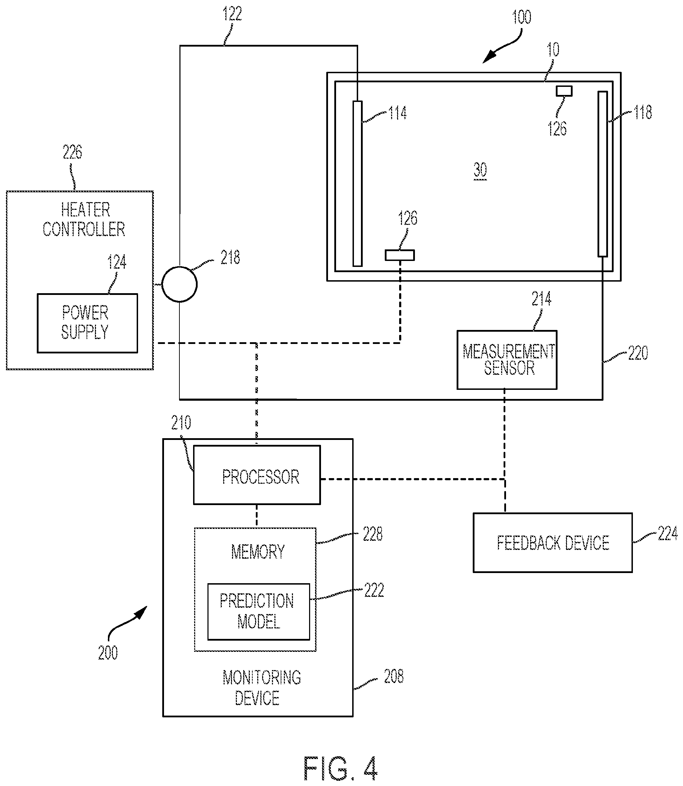

The present disclosure is directed to a system 200 (shown in FIG. 4) and methods for monitoring a condition of a coated article, such as a transparency 10 (shown in FIGS. 2A, 2B, 3, and 4) comprising a conductive or resistive coating 30 (shown in FIGS. 2A, 2B, 3, and 4). The system 200 can be configured to use electrical resistance data for the resistive coating 30 to create, train, and/or update a life prediction model for the coating 30 and/or transparency 10, which can be used to determine an "estimated remaining usable life" for the coating 30 and/or for the transparency 10. It is believed that changes in resistance of the coating 30 (e.g., a substantially linear increase in resistance of the coating 30 over time) can be due to normal aging of the coating 30. In particular, while not intending to be bound by theory, it is believed that the coating 30 slowly oxidizes during years of service as moisture accumulates in the coating 30. This oxidization causes electrical resistance of the coating 30 to increase according to a predictable linear or non-linear function, which is modeled by the life prediction model. Specifically, the life prediction model is intended to estimate effects of such oxidization over time to determine the estimated remaining usable life of the transparency 10 and/or coating 30. The life prediction model and estimated remaining usable life may be used to schedule replacement of the article in advance rather than waiting for the article to fail, avoiding the need for unscheduled maintenance.

The "coated article" can be a structural, functional, and/or aesthetic component of a stationary structure, such as a building, or of a vehicle, such as an aircraft, water vessel, automobile, truck, trailer, bus, locomotive, or train car. The article is coated by the resistive coating 30, such as a coating 30 capable of being heated to defog and/or deice portions of the coated article. The article can be formed from any convenient material capable of being coated by the resistive coating 30, such as plastic, glass, and/or metal. The coated article can be a transparency 10, such as a transparency configured to be mounted to a building or to a frame or fuselage of a vehicle, to form a window or windshield. Transparencies 10 are generally transparent or translucent articles having a visible light transmittance sufficient to allow an individual to view objects through the transparency 10. Transparencies 10 can have a visual light transmittance of 10% or greater. The article may also include other types of substrates, panels, sheets, walls, and surfaces, such as a body panel of a vehicle, such as a panel forming a portion of an aircraft fuselage.

The "resistive coating" can be a material having the ability to conduct electrical current and which exhibits resistance as the electrical current passes through the coating 30. The "resistive coating" can include conductive layers, films, membranes, and other surfaces applied to and/or positioned between portions of the coated article.

In addition to monitoring the condition of the resistive coating 30, the systems 200 disclosed herein can also be used to monitor a condition of a heat mat or similar electric device (i.e., a heating blanket) including resistive wires positioned in a packaging for heating a surface. In such cases, the system 200 can be configured to monitor changes in resistance of electrical current passing through the resistive wires of the heat mat over time. The detected changes in resistance of the wires over time is used to determine the estimated remaining usable life for the wires of the heat mat using the same methods and data analysis techniques disclosed herein for determining the estimated remaining usable life of the coating 30 and transparency 10.

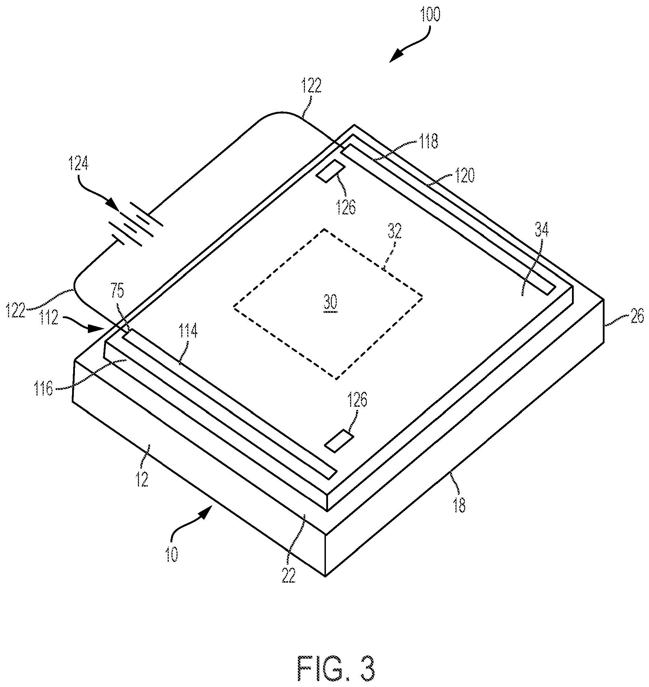

As shown in FIGS. 2A, 2B, and 3, the resistive coating 30 can be a heater film configured to increase in temperature when an electrical current is applied to the coating 30. The resistive coating 30 can be used in window heating arrangements or systems 100 configured to prevent moisture, fog, and/or ice from accumulating on a surface of the transparency 10. The resistive coating 30 can also be another type of conductive layer of the transparency 10, such as a static reducing or p-static layer. A p-static layer can have anti-static and/or static-dissipative properties and can be configured to drain or dissipate static charges that collect in the transparency 10.

The system 200 is configured to monitor changes to the resistive coating 30, such as changes caused by deterioration of the resistive coating 30 due to prolonged use, exposure to environmental elements, and/or from damage caused by sudden events, such as a sudden impact with an object, thermal shock, and/or sudden changes in temperature and/or pressure around the transparency 10. Also, the systems 200 is configured to track changes in a resistance of the resistive coating 30 over time. The present inventor has recognized that such detectable changes in resistance over time indicates deterioration of the coating 30 and approaching or imminent failure of the coating 30. While not intending to be bound by theory, it is believed that during normal use, resistance of the resistive coating 30 gradually increases over time substantially linearly due to gradual degradation of the coating structure (i.e., degradation caused by oxidation of the coating 30), and/or degradation of surrounding coatings, bus bars, and/or other electrical connections of the transparency 10 and associated electrical systems and circuitry. Since electrical current is inversely proportional to resistance, current flowing through the resistive coating 30 decreases substantially linearly as the resistance increases. As used herein, "substantially linearly" refers to a gradual increase in resistance of the resistive coating 30 having a regression coefficient (R) of 0.9 or higher over a period of time of 5 hours or longer during normal operation of the coating 30. Such gradual degradation impedes or restricts a flow of electrical current through the coating 30 causing the increasing resistance, until the coating 30 fails.

Failure or "substantial degradation" of the resistive coating 30 can refer to an occurrence of an event that causes substantial damage to the transparency 10 and/or coating 30, such that the coating 30 either can no longer be heated by applying electrical current to coating 30 and/or that it is no longer safe to apply electrical current to coating 30. The damaging event can be cracking of the transparency 10 and/or coating, breaking of the leads or terminals that connect the coating 30 to a power source, or arcing events. Such damaging events cause electrical resistance of the resistive coating 30 to increase drastically compared to the gradual linear increase that occurs during normal use of the coating 30. The system 200 is configured to predict when the transparency 10 and/or coating 30 will fail so that it can be serviced or replaced before such damaging events actually occur.

The damaging event can be a "substantial arcing event." Arcing can occur when electrical charge accumulates within the resistive coating 30 and/or within other portions of the transparency 10. The accumulation of electrical charge may occur when a gas and/or insulating material between electrodes, such as the bus bars or other electrodes mounted to the resistive coating 30, begins to breakdown. When the accumulated electrical current eventually discharges from the resistive coating 30, an electrical arc is produced, which can appear to promulgate across the surface of the coating 30. In extreme cases, such arcing events can cause the resistive coating 30 and/or transparency 10 to crack due to thermal shock caused by the arcing event.

More specifically, cracking of the transparency 10 can occur as follows. In most cases, an arcing will propagate across the resistive coating 30 and then stop due to structural characteristics of the coating 30, such as a change in a thickness of a portion of the coating 30. The stop creates a concentration of energy, which creates a hot spot. Such "hot spots" create large thermal stresses because of the temperature difference between the hot spots and the surrounding portions of the coating 30 and/or transparency 10. Such stresses ultimately lead to breakage of the transparency 10. Even if the transparency 10 does not crack, arcing events can be distracting for bystanders, vehicle passengers, or vehicle operators.

As used herein, the "substantial arcing event" can refer to arcing that is noticeable to a vehicle operator and/or which produces a thermal shock that increases a localized temperature of the coating 30 beyond an acceptable limit. As will be appreciated by those skilled in the art, it is desirable to replace the transparency 10 before the "substantial arcing event" occurs so that the vehicle operator is not distracted by the "substantial arcing event" and so that the transparency 10 is replaced before cracking occurs.

It is noted that "minor arcing" occurs often during normal use of the resistive coating 30. Minor arcing can refer to arcing events that are not visible to vehicle operators and/or which do not create hot spots in the resistive coating 30. The transparency 10 generally does not need to be repaired or replaced to avoid such minor arcing events, since minor arcing does not distract the vehicle operator and does not damage the transparency 10.

The present disclosure is also directed to systems 200 for providing information to users (e.g., vehicle operators, pilots, maintenance personnel, scheduling systems, and/or vehicle owners) about a condition of the resistive coating 30 and about the "estimated remaining usable life" of the coating 30. During normal operation of the vehicle and/or use of the transparency 10 and coating 30, the system 200 can be configured to provide the user with periodic updates for the estimated remaining usable life of the transparency 10 and coating 30. The update may be provided as a numeric value representing a remaining number of flight hours, heating cycles, days, weeks, or months until expected failure of the coating 30 and/or transparency 10.

### Aircraft transparencies

In the following discussion, the "coated article" is described as a windshield (e.g., the cockpit windshield) or window (e.g., a passenger window) of an aircraft 2 comprising a transparency 10 and the coating 30 applied to a surface of the transparency 10. However, as previously discussed, the system 200 of the present disclosure can be used with any of the previously described coated articles and, in particular, can be used to monitor a status of transparencies 10 coated by resistive coatings 30 used in various stationary structures, such as buildings, or in various types of vehicles.

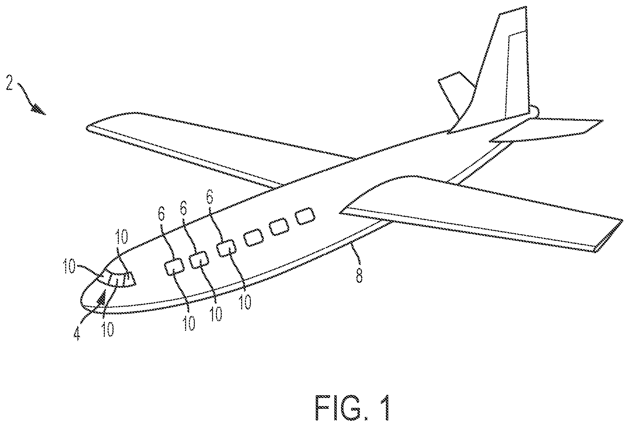

With reference to FIG. 1, an exemplary winged aircraft 2, which can include the heating system 100 and monitoring system 200 of the present disclosure, comprises a windshield 4 formed from transparencies 10 mounted within openings in a fuselage 8 of the aircraft 2. The windshield 4 is positioned adjacent to the fore or front end of the aircraft 2. The windshield 4 desirably has a form that conforms to the shape of the fuselage 8 of the aircraft 2. To facilitate attachment to the fuselage 8, the windshield 4 includes a support frame that surrounds the transparency 10 and provides a mechanical interface between the transparency 10 and the fuselage 8. The aircraft 2 also includes a plurality of passenger windows 6 arranged side by side extending along the fuselage 8 of the aircraft 2. The passenger windows 8 may also include frames for mounting transparencies 10 to the fuselage 8. As previously described, the transparencies 10 of the windshield 4 and passenger windows 6 can comprise and/or are coated by the resistive coating 30 (not shown in FIG. 1), such as a heater film and/or p-static layer, covering a portion of a surface of the transparencies 10. As described in further detail herein, the coating 30 of each transparency 10 is electrically connected to the heating system 100 for providing electrical current to the coating 30 to heat the coating 30. Electric components of the heating system 100 associated with each transparency 10 can also be in electrical communication with components of the monitoring system 200 for providing resistance data used for generating and/or updating the life prediction model and determining the estimated remaining usable life for the transparency 10 and coating 30.

A transparency 10 including features of the present disclosure is shown in FIGS. 2A and 2B. The transparency 10 shown in FIGS. 2A and 2B is a two-ply transparency including two laminated sheets connected together along a major surface of the sheets. The transparency 10 can also include three or more plies separated by interlayers. A three-ply transparency including a resistive coating that can be monitored by the resistance monitoring systems 200 of the present disclosure is shown and described in FIG. 2 and at column 5, line 18 to column 6, line 2 of U.S. Patent No. 10,063,047.

The two-ply transparency 10 shown in FIGS. 2A and 2B includes a first sheet 12, a second sheet 14, and an interlayer 16 between the sheets 12, 14. The sheets 12, 14 include a first or inner surface 18, 20, an opposing second or outer surface 22, 24, and a peripheral edge 26, 28 extending therebetween. The first sheet 12 and the second sheet 14 can be formed from plastic materials, such as polycarbonates, polyurethanes (including OPTICOR^{™} manufactured by PPG Industries Ohio, Inc.), polyacrylates, polyalkylmethacrylates, stretched acrylic, or polyalkylterephthalates, such as polyethyleneterephthalate (PET), polypropyleneterephthalates, and/or polybutyleneterephthalates. The sheets 12, 14 can be formed from glass materials, such as conventional soda-lime-silicate glass (the glass can be annealed, heat-treated, thermally tempered, or chemically tempered glass). The sheets 12, 14 can also be formed from combinations of plastic and glass materials. The interlayer 16 can be formed from a softer plastic material, such as polyvinyl butyral. As used herein, a "softer" plastic material refers to a material having a hardness (e.g., Shore durometer) that is less than another material, as measured by the ASTM D2240 standard test method.

The transparency 10 also comprises the resistive coating 30, which includes a center region 36, covering a portion of a surface 18, 20, 22, and/or 24 of one of the sheets 12, 14. The coating 30 can be a transparent conductive film or a transparent conductive mesh. The resistive coating 30 can be applied to an outer surface 22, 24 of the sheets 12, 14. The resistive coating 30 may also be applied between an inner surface 18, 20 of one of the sheets 12, 14 and the interlayer 16. The resistive coating 30 can be formed from or comprise a conductive metal oxide, such as indium tin oxide (ITO), aluminum doped zinc oxide, fluorine doped tin oxide, tin oxide, antimony doped tin oxide, and others. The resistive coating 30 can also be formed from or comprise a conductive metal, such as gold, silver, antimony, palladium, platinum, and others. The resistive coating 30 can also comprise one or more metal oxides, one or more doped metal oxides, one or more reflective layers including a noble metal, or a coating having a plurality of dielectric layers and a metallic layer.

The resistive coating 30 can be configured to provide variable heating by varying a thickness of the coating 30. The resistive coating 30 can be configured to heat selected regions of the transparency 10 to a higher temperature than other regions of the transparency 10. The coating 30 can be configured such that portions of the sheet 12, 14 that are more likely to fog or where moisture or ice are most likely to form, such as portions 34 around the periphery of the coating 30, can be warmed to a higher temperature than other portions of the transparency 10. Portions of the sheets 12, 14 that are less susceptible to fogging or icing, such a central portion 32 of the coating 30, can be configured to be heated to a lower temperature.

### Transparency heating systems

With reference to FIGS. 3 and 4, the aircraft transparencies 10 described herein can be used with the window heating system 100 for controlling flow of electrical current through the resistive coating 30 of the transparency 10. The window heating system 100 includes the aircraft transparency 10 and resistive coating 30 as described in connection with FIGS. 2A and 2B. The system 100 also includes a conductive bus bar system or assembly 112 including a first bus bar 114 positioned along a first edge 116 of the sheet 12 and a second bus bar 118 positioned along an opposing edge 120 of the sheet 12. As is known in the art, the bus bars 114, 118 can be positioned on top of the resistive coating 30 or film and can be physically and electrically connected to the coating 30 or film by a conductive adhesive or conductive tape, as are known in the art. Bus bars 114, 118 can also be positioned under the resistive coating 30, such as between the outermost surface 22 of the sheet 12 and the resistive coating 30. The resistive coating 30 can also be positioned on an inwardly facing surface 18, 20 of a sheet 12, 14 to protect the coating 30.

The system 100 can also include leads 122, such as wire leads, connected to and extending from the bus bars 114, 118 by solder, conductive tape, or other known conductive adhesives. The leads 122 can extend from the bus bars 114, 118 to a heater controller 226 (shown in FIG. 4) comprising a power supply 124. The power supply 124 can be configured to provide electrical current to the resistive coating 30 to heat the resistive coating 30. Further, the heater controller 226 and/or power supply 124 can be configured to receive information from temperature sensors 126 positioned on the transparency 10. The temperature sensors 126 can be installed in the transparency 10, such as between the sheets 12, 14 of the transparency 10, and connected to a heater controller 226 or power supply 124 by leads 122 or wires extending from the transparency 10. The temperature sensors 126 can also be external to the transparency 10, such as positioned between the transparency 10 and a frame of the aircraft 2. When a measured temperature of the transparency 10 and/or on a surface of the transparency 10 reaches or exceeds a predetermined target value, the power supply 124 and/or heater controller 226 can be configured to stop applying electrical current to the bus bars 114, 118 and resistive coating 30. In a similar manner, as described in further detail herein in connection with monitoring system 200, the heating system 100 can be configured to disconnect the resistive coating 30 from the power supply 124 to protect the resistive coating 30 and/or power supply 124. Particularly, the power supply 124 may be automatically disconnected from the resistive coating 30 when arcing is imminent or has occurred.

### Monitoring systems for a transparency and/or resistive coating

Having described the aircraft 2, transparency 10, and window heating systems 100, systems 200 for monitoring a condition of the transparency 10 and resistive coating 30 and, in particular, for determining the estimated remaining usable life of the coating 30 and the transparency 10 using the life prediction predictive model will now be described.

With specific reference to FIG. 4, the system 200 for monitoring the condition of the transparency 10 and the coating 30 includes a monitoring device 208 comprising a processor 210 for processing information received from the transparency 10 and heating system 100. The monitoring device 208 can be a dedicated or general purpose computing device adapted to communicate with existing electrical systems of the aircraft 2 (shown in FIG. 1), such as a computer server, tablet, laptop, smart phone, or any other general purpose computing device. The monitoring device 208 can be positioned in proximity to the transparency 10 or at any other location within or external to the aircraft 2. The monitoring device 208 can be an independent electronic device for processing data related to resistance of the resistive coating 30, as shown in FIG. 4. The monitoring device 208 can also be integrated with other electrical systems of the aircraft 2, such as the heater controller 226 or other aircraft electrical systems. The monitoring device 208 may also be an external computer server, such as a server at a vehicle maintenance facility, configured to receive and process data from multiple aircrafts serviced by the facility to monitor the condition of and schedule maintenance tasks for the multiple aircrafts.

The processor 210 of the monitoring device 208 can be electrically connected to the heater controller 226 and can be configured to provide instructions to the heater controller 226 and/or power supply 124 for controlling the electrical current applied to the resistive coating 30. As discussed previously, the heater controller 226 can be configured to turn off the power supply 124 when a temperature of the resistive coating 30 measured by the temperature sensor 126 reaches or exceeds the predetermined target value. The processor 210 may also cause the heater controller 226 to turn off the power supply 124 and/or disconnect the power supply 124 from the transparency 10 when a substantial arcing event is believed to be imminent (i.e., the estimated remaining usable life has expired or is nearly expired) or has occurred. In order to cease applying electrical current to the resistive coating 30, the heater controller 226 can be configured to open a switch 218 positioned on a lead 122 extending between the power supply 124 and the bus bar 114. When a measured temperature is below the predetermined value, the heater controller 226 can be configured to transition the switch 218 to a closed position, in which an electrical connection between the power supply 124 and the resistive coating 30 is established.

The processor 210 of the monitoring device 208 can also be electrically connected to a measurement sensor 214 for sensing or measuring electrical properties of the resistive coating 30. The electrical properties measured by the measurement sensor 214 can include resistance of the resistive coating 30, current flow through the coating 30, and/or voltage drop of the resistive coating 30. The measurement sensor 214 can be a sensor connected to the coating 30 and/or to leads 122, 220 extending from the coating 30 for measuring electrical signals passing through the coating 30 and/or leads 122, 220. The measurement sensor 214 can be an ammeter (e.g., a device for measuring electrical current), as is known in the art, configured to measure a current passing through the coating 30. As is known in the art, an ammeter connected to an alternating current (AC) circuit can be configured to measure a root-mean-square (RMS) value for current passing through the circuit. The measurement sensor 214 can be configured to determine the electrical resistance of the coating 30 based on the measured electrical current. The measurement sensor 214 can directly measure resistance of a signal passing from the resistive coating by an inductive transformer method. The measurement sensor 214 can also be a peripheral device, such as a handheld electrical scanner, configured to provide an electrical current to the resistive coating 30 and to measure a responsive signal from the resistive coating 30. The measurement sensor 214 can be configured to process the responsive signal to determine the electrical properties of the coating 30.

The measurement sensor 214 can be configured to periodically or continually sense or determine the electrical properties of the resistive coating 30 and to provide the sensed electrical properties to the processor 210. The processor 210 can be configured to receive and process data representative of the sensed electrical property of the resistive coating 30 from the measurement sensor 214 to determine a present resistance value for the coating 30. Electrical resistance refers to a measure of the difficulty of passing an electrical current through a conductor. As discussed previously, deterioration of the coating 30 and/or of the transparency 10 from prolonged use or from sudden damaging events is believed to cause the electrical resistance of the resistive coating 30 to increase. The processor 210 can be configured to identify drastic increases or spikes in resistance, which can indicate that failure of the transparency 10 is immanent or has occurred. The processor 210 can be configured to provide alerts or notifications to users when failure of the coating 30 has occurred or is imminent. The processor 210 is also configured to calculate and monitor the estimated remaining usable life of the coating 30 and transparency 10 so that corrective action can be taken a reasonable period of time prior to failure.

The system 200 can further comprise a feedback device 224, such as a visual display, which displays the estimated remaining usable life. The feedback device 224 can be an element of an aircraft control system and can be located on an aircraft control panel. The feedback device 224 can be a separate computer device, such as a laptop computer, portable computer device, computer tablet, smart phone, or similar portable computer device in wired or wireless communication with the monitoring device 208 and processor 210. The feedback device 224 can also be a device, such as a computer server or database system, which is remote from the aircraft 2 and connected to the aircraft 2 by a long-range wired or wireless data communications interface.

### Processes for generating and using the life prediction model

Having generally described components of the monitoring system 200, processes for determining the estimated remaining usable life of the resistive coating 30, which can be performed by the processor 210, will now be described. As used in the present disclosure, the "estimated remaining usable life" can refer to an estimated period of time before failure of the coating 30 or transparency 10 occurs, such as an estimated time until a substantial arcing event occurs. Estimated remaining usable life can also refer to an estimated period of time before the risk of failure (e.g., a risk that a substantial arcing event will occur) exceeds user comfort levels. Estimated remaining usable life can also refer to an estimated amount of time during which the coating 30 or transparency 10, and associated electronics, will remain in safe working order under normal use conditions. Generally, the estimated remaining usable life takes into account deterioration to the coating 30 that occurs during normal operation of the aircraft 2 in normal environmental conditions in the determination of the remaining usable life of the coating 30. The estimated remaining usable life does not account for occurrences of certain, sudden, damaging events, such as sudden impacts to the coating 30 or transparency 10, which may drastically shorten the lifespan of the coating 30 or transparency 10.

In order to determine the estimated remaining usable life of the resistive coating 30 based on changes in resistance of the coating 30, the processor 210 is configured to apply the life prediction model 222, such as a linear regression model, to measured resistance data for the coating 30. The life prediction model 222 can also be based on known non-linear regression functions, such as polynomial regression, logistic regression, or quantile regression. The life prediction model 222 can be based on previously collected data points for resistance of the coating 30 and/or transparency 10 collected over time (i.e., resistance data collected over the first month that the transparency 10 and coating 30 are in use) and/or on historical resistance data for a substantially similar coating 30 or transparency 10 used in similar environmental conditions. As used herein, a "substantially similar" coating 30 or transparency 10 refers to a coating or transparency that is of the same type (i.e., same materials and formed by the same processing techniques) and same size (i.e., same length, width, thickness) as the coating 30 or transparency 10 being monitored by the system 200.

The life prediction model 222 can be stored on the aircraft 2, such as on computer-readable memory 228 associated with the monitoring device 208 and/or processor 210. Alternatively, the model 222 can be stored on a remote computer server or device that periodically or continually receives resistance data from the measurement sensor 214 associated with the coating 30. In such instances, resistance data can be wirelessly transmitted to the remote computer server or device. Resistance data may also be transmitted or downloaded to the computer server or device by a wired connection periodically, such as each time that an aircraft 2 arrives at a maintenance facility.

The life prediction model 222 can be a linear regression model comprising a regression equation calculated from resistance values gathered since the transparency 10 entered service and/or from the historical data from other similar transparencies and coatings. The regression equation can be trained, fine-tuned, or updated over time as additional resistance data for the transparency 10 and coating 30 is collected. Accordingly, accuracy of the life prediction model 222 can improve over the service life of the transparency 10.

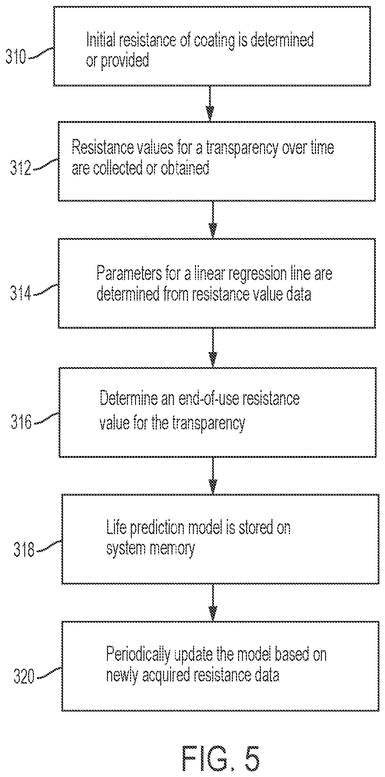

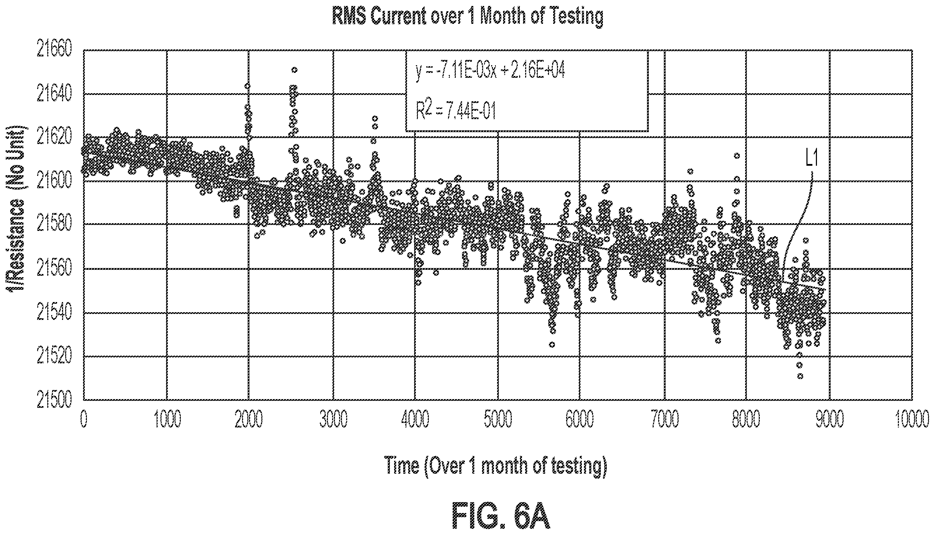

FIG. 5 is a flow chart with steps for generating the life prediction model 222 from data collected by the measurement sensor 214 of the system 200 and/or based on historical data from a substantially similar transparency 10 and/or coating 30. FIGS. 6A-6C are graphs showing schematically how the life prediction model 222 is created.

As shown in FIG. 5, at step 310, an initial resistance for the coating 30 is determined or provided. The initial resistance, which is the y-intercept value for the linear regression equation, for a particular transparency 10 and coating 30 can be a measured value detected during manufacture of the transparency 10, before the transparency 10 is delivered to a customer, or immediately after the transparency 10 is installed in the aircraft 2. In such cases, the initial resistance value used for the life prediction model 222 is the resistance value measured for a particular transparency 10 prior to use. Alternatively, the initial resistance or y-intercept value can be a determined electrical resistance for a particular type and/or size of coated transparency 10. To determine the initial resistance, a manufacturer may test a number of transparencies of a particular type and size and determine an average initial resistance value for the tested transparencies. The determined average initial resistance value can then be used for the life prediction model 222 for any transparencies of the particular type and size.

At step 312, resistance measurements are collected or obtained for the transparency 10. Electrical current measurements detected by the measurement sensor 214 can be periodically collected for a short period of time during normal use of the transparency 10 and aircraft 2. As shown in FIG. 6A, electrical current of the coating 30 is periodically determined during a period (1 month) of operation of the aircraft 2. Each data point on the graph (there are 8,950 points shown in FIG. 6A) represents a measurement for current (1/resistance) at a specific time measured from initial use of the transparency 10. As shown in the graph, the resistance of the coating increases (electrical current or 1/resistance decreases) over the one month period. While there are individual variations between data points, the decrease in measured electrical current (1/resistance) is generally linear as the transparency 10 ages.

At step 314, an equation for a regression line L1 (shown in FIG. 6A) for the groups of data points is calculated using a linear regression algorithm, such as the linear regression algorithm of a commercially available computer spreadsheet or database. As shown in FIG. 6A, the generated regression equation for the line (y=ax+b) has a constant y-intercept (2.16*10⁴), which corresponds to the initial resistance of the coating 30 and/or transparency 10 prior to use. The *a* value or slope of the line L1 is -7.11 *10⁻³. The R² value, indicating an accuracy of the regression analysis, for the regression is 0.744.

At step 316, an end-of-use resistance value or end-of-use threshold value for the coating 30 is obtained or determined. The "end-of-use resistance" refers to the minimum electrical current value (e.g., maximum measured resistance value) for the coating 30, where it is believed that the transparency 10 can continue to be used safely without unreasonable risk of failure (i.e., without an unreasonable risk that a substantial arcing event will occur). Once the coating 30 exceeds the end-of-use resistance value, it is likely that the coating 30 has "substantially degraded" and should be repaired or replaced. The end-of-use threshold or maximum resistance values can also correspond to a breaking point for the transparency 10, or within a percentage (e.g., within 5% or within 10%) of the breakage point for the transparency 10.

The life prediction model 222 disclosed herein can use an experimentally derived end-of-use resistance value for a substantially similar transparency 10 and coating 30. Since aircraft transparencies 10 often have a service life of several years or longer, controlled laboratory testing, in which a particular type of transparency is exposed to severe conditions, is used to determine the end-of-use resistance value more quickly. The following methodology may be followed to experimentally determine an end-of-use or maximum resistance value by laboratory testing.

A transparency for a window or windshield for a particular use (e.g., for a particular type of vehicle) is provided. Any gaskets and z-bars are removed from the window or windshield so that moisture passes into the sample window or windshield more quickly. Moisture is then applied to the window or windshield by spraying or immersion for an extended period of time. As the transparency of the window or windshield is exposed to moisture, electrical current is applied to the resistive coating 30 to approximate heating cycles performed for a vehicle heating system. Resistance data for the coating 30 is collected and analyzed to determine when resistance of the coating 30 spikes significantly, which is an indication that the coating 30 is near failure. The maximum resistance value for the coating 30, just before the resistance spikes, is recorded. This resistance value, just prior to the final spike, can be the maximum acceptable or end-of-use value. As discussed previously, the resistance value may be reduced by a small amount (e.g., within 5% or within 10%) for safety.

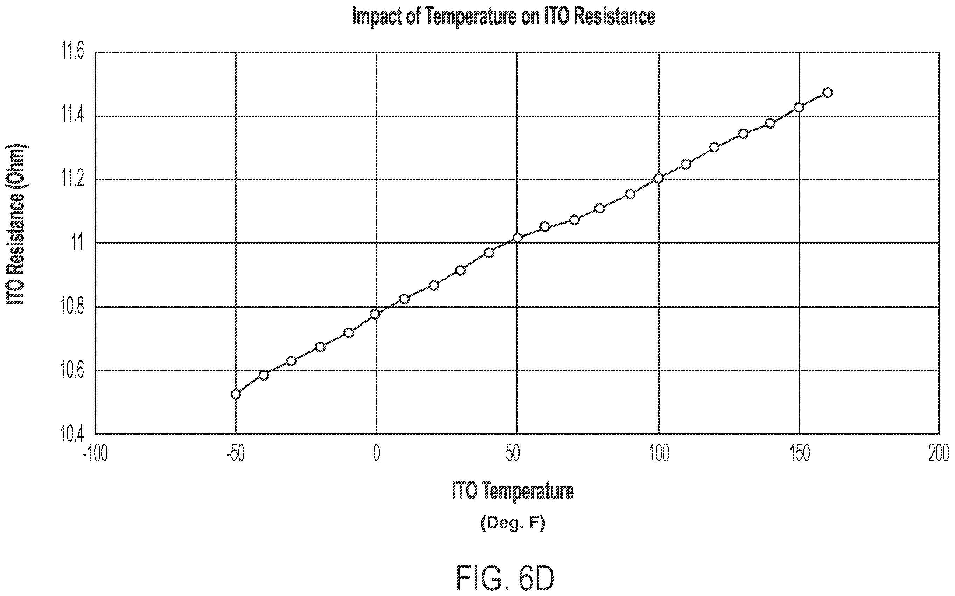

A challenge in experimentally determining end-of-use resistance values for the window or windshield is that experimental conditions must be thermally controlled because resistance of the coating 30 is highly temperature dependent, as shown by the graph in FIG. 6D. As shown in FIG. 6D, measured resistance may vary by approximately 9% as temperature changes from -50°F to 150°F. As described in further detail herein, the systems and methods of the present disclosure can adjust measured resistance values in a temperature dependent manner to control for temperature-dependence of resistance of the coating 30.

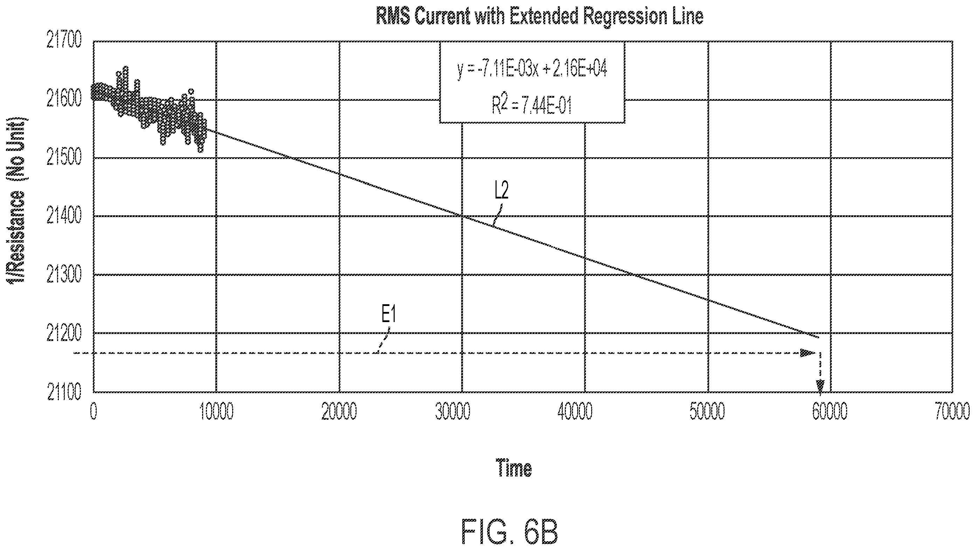

**In** FIG. 6B, the regression line (line L2 in FIG. 6B) has been extended from the initial data set (shown in FIG. 6A) to the end-of-use point or value. In FIG. 6B, the end-of-use value (21200) is shown by the dashed line E1. Based on the slope of the line L2, which was determined by a linear regression algorithm from the available data, a time when line L2 will intersect line E1 can be predicted. Based on the prediction, the remaining usable life is determined by subtracting the present time (e.g., present age of the transparency) from the predicted failure time (e.g., time when line L2 intersects line E1).

At step 318, once the life prediction model 222 is created, the model 222 can be stored on the computer readable memory 228 associated with the monitoring device 208 and/or processor 210. Once the life prediction model 222 is provided on the memory 228, the processor 210 can apply measured resistance values to the model 222 to determine and periodically recalculate the estimated remaining usable life for the transparency 10 and coating 30, as described in further detail herein.

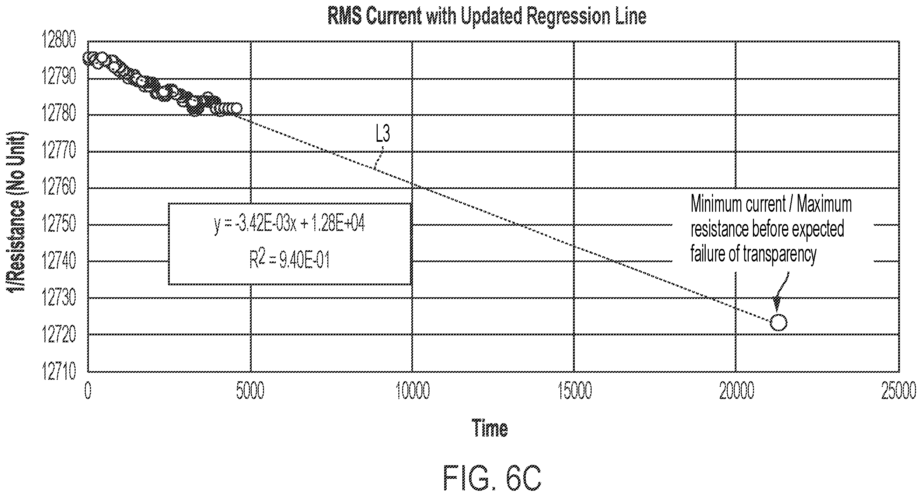

At step 320, after being stored on the system memory 228, the linear regression model 222 can be periodically updated during the life of the transparency 10 and coating 30 based on additional obtained resistance values, which are used to provide additional data points for the linear regression analysis. FIG. 6C shows a graph with additional data points for measured resistance or electrical current. Based on the additional data points, a new linear regression line L3 can be generated. The line L3 has the same y-intercept value, but a different slope calculated taking into account the additional resistance values.

Using the new line L3, the time when the transparency 10 is expected to fail can be recalculated. The new expected failure time is then used to update the estimated remaining usable life, which is determined by subtracting the updated estimated failure time from the present time (e.g., the present age of the transparency). In this way, during each flight of the aircraft 2, the slope of the regression line (y=ax+b) continues to change, becoming more and more stable as additional resistance data is available. Accordingly, the methods and systems disclosed herein can fine tune the life prediction model 222 as the coating 30 and transparency 10 age.

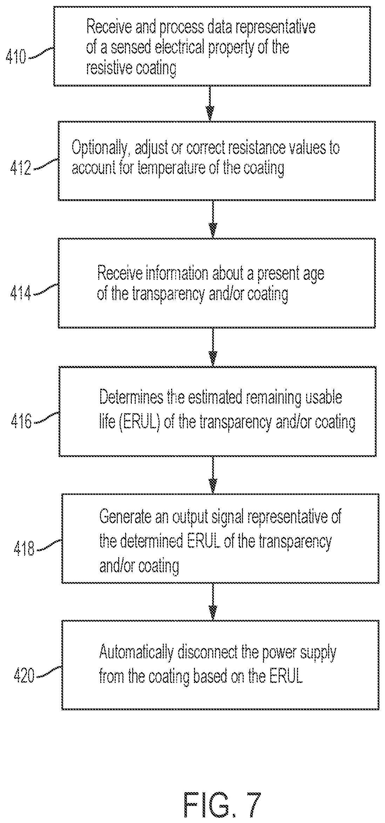

With reference to FIG. 7, a process performed by the processor 210 of the system 200 for determining and providing feedback about the estimated remaining usable life of the coating 30 and/or transparency 10 is illustrated.

At step 410, the processor 210 is configured to receive and process data representative of a sensed electrical property of the resistive coating 30 from a measurement sensor 214 electrically connected to the resistive coating 30. The electrical property of the resistive coating 30 can be a directly measured resistance of the coating 30. Alternatively, the sensed electrical property can be an electrical current flow through the coating 30 and/or voltage drop of the resistive coating 30. In that case, the present resistance of the coating 30 can be calculated from the received sensed data. In the case of a heating system 100 for providing alternating current (AC) to the coating 30, the determined or measured resistance can refer to a root-mean-square (RMS) value for electrical current passing through the coating 30 over a predetermined period of time.

At step 412, optionally, the received or calculated values for the present resistance of the coating 30 can be adjusted or correlated to account for a temperature of the coating 30 when data representative of the resistance was detected. Adjusting or correlating the present resistance value based on temperature is believed to improve accuracy of the estimated usable life provided by the predictive model 222 by removing resistance changes caused by reversible temperature change, thereby ensuring that any detected resistance change for the coating 30 is due to deterioration of the coating 30.

In order for such correction or correlation of resistance measurements, the temperature of the coating 30 can be obtained by the temperature sensors 126 (shown in FIG. 4) positioned on or in proximity to the transparency 10. In order to account for temperature changes, experimentally derived or calculated values may be used to estimate what portion of the measured resistance is due to a change in temperature. More specifically, as previously discussed and while not intending to be bound by theory, it is believed that resistance of a coating 30 formed from ITO can change from 1% to 7% due to extreme temperature variations. In fact, experiments conducted by the inventor have demonstrated that an "extreme temperature variation" (e.g., increasing a temperature of a coating from -40 °F to +130 °F (-40 °C to +54 °C)) increases the resistance of the coating 30 by 6% to 7%. FIG. 6D shows a graph showing effects of temperature on measured resistance values for a coating 30.

In order to account for changes in temperature, experimental measurements may be obtained for a resistive coating 30 showing a change in resistance of the coating 30 due to changes in ambient temperature. The experimental measurements can be used to calculate a correction factor to account for the changes in temperature. The correction factor can be stored on system memory 228 associated with the processor 210. The processor 210 can be configured to determine a change in temperature of the coating 30 from data sensed by the temperature sensors 126. The processor 210 can then determine an expected resistance change due to the measured temperature variations based on the measured temperature values and the correction factor stored on the system memory 228. When analyzing resistance change data for the coating 30, the processor 210 can filter out the "expected resistance change" caused by the temperature variations. Any remaining change in resistance after the "expected resistance change" is filtered out is assumed to be due to changes in a condition of the coating 30 and not to temperature changes.

At step 414, the processor 210 next receives information about a present age of the transparency and/or coating. The age of the transparency and/or coating can be provided in terms of total age (i.e., total numbers of days since the transparency was installed in the vehicle) or in terms of use (i.e., flight hours that the transparency has been in use). The present age may also be provided in terms of an amount of time that the coating 30 has been in use (e.g., a total number of hours that that electrical current is supplied to the coating 30 through the heater system 100).

At step 416, the processor 210 determines the estimated remaining usable life of the transparency 10 by applying the received information about the present age of the coating 30 and/or transparency 10, the determined present resistance (or temperature-adjusted resistance) value for the coating 30, and the predetermined (e.g., experimentally determined) end-of-use resistance value for the coating 30 to the life prediction model 222 stored on system memory 228. As previously described, the life prediction model 222 for resistance change over time can be a linear model based on an initial resistance value for the resistive coating 30 and the slope determined by applying the linear regression algorithm to the past resistance measurements for the resistive coating 30.

In order to calculate the estimated remaining usable life using the life prediction model 222, as shown in FIG. 6B, the life prediction model 222 includes the line L2 that extends between the initial resistance (e.g., y-intercept value) and the end of use point. In order to calculate the estimated remaining usable life, the present resistance value shows how much resistance has changed since the coating 30 and transparency 10 entered service. The present age of the transparency 10 and coating 30 shows how long it has taken for the amount of degradation (i.e., resistance change) to occur. As will be appreciated by those skilled in the art, based on the present resistance value, the present age value, and the slope of the line L2, the estimated amount of time until the resistance of the coating 30 reaches the end-of-use point (i.e., the estimated remaining usable life of the coating 30) can be easily calculated.

At step 418, the processor 210 can further be configured to generate an output signal representative of the determined estimated remaining usable life. The output signal can be provided from the processor 210 to the feedback device 224, which can be configured to receive the generated output signal representative of the estimated remaining usable life from the processor 210 and provide an alert when the estimated remaining usable life is below a predetermined value. In addition to providing alerts, the estimated remaining usable life can be displayed on a display screen of the feedback device 224 in real-time as a numeric value, such as a numeric value indicating a number of flight minutes, hours, or days of usable life remaining (e.g., until there is an unreasonable risk of failure of the coating 30 or transparency 10). The estimated remaining usable life can also be displayed as a percentage of usable life remaining for the coating 30 or transparency 10. Information about estimated remaining usable life may also be provided as a graphical indicator, such as a computer generated icon of a gauge or scale displayed on the display screen. The icon can be similar to a gas gauge icon including a dial that moves towards an empty position as the estimated remaining usable life is depleted.

The information and alerts provided on the feedback 224 (shown in FIG. 4) can be used to schedule maintenance for the aircraft 2 and windshield 4. Maintenance personnel can plan to replace a windshield 4 of the aircraft 2 several days or weeks before the estimated remaining usable life expires. By providing the specified time period, vehicle operators and maintenance personnel can have sufficient time to correct any identified problems with the coating 30 and/or to replace the windshield 4 before catastrophic failure of the coating 30 occurs.

At step 420, the processor 210 can also be configured to automatically disconnect the power supply 124 from the coating 30 by moving the switch 218 (shown in FIG. 4) to an open position, when the estimated remaining usable life is expired and/or when the estimated remaining usable life is below a predetermined threshold value.

### Processes for updating the life prediction model

The processor 210 may also be configured to periodically or continually update the life prediction model 222 stored on the computer-readable memory 228 based on additional (e.g., newly received) data either for a particular transparency 10 being monitored or based on additional historical data for a same type of transparency used in similar environmental conditions. Updating the life prediction model 222 improves accuracy of the estimated remaining usable life, meaning that maintenance and replacement of the transparency 10 can be scheduled more efficiently.

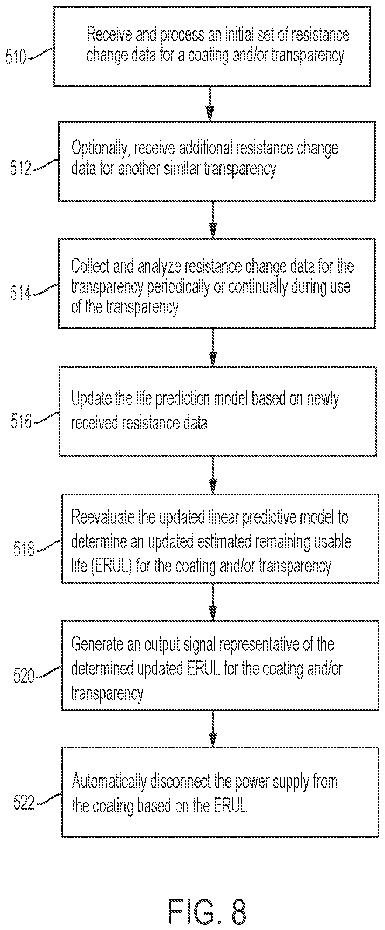

A process performed by the processor 210 and/or by a separate processor or computing device of the system 200 for creating and updating the life prediction model 222 is shown in the flow chart of FIG. 8. With reference to FIG. 8, at step 510, an initial set of resistance change data for a coating 30 is received and processed. The initial set of resistance change data can include data points showing changes in resistance of the coating 30 over time. As previously discussed, the resistance values for the data points can be adjusted to account for resistance change due to changes in temperature. The initial resistance value (y-intercept value) is also received or obtained and, as in previously described examples, a liner regression algorithm is applied to the received resistance data points to determine the slope for the regression line of the life prediction model 222. The generated regression line extends from the initial resistance (y-intercept value) to the end-of-use resistance value. As previously discussed, an exemplary life prediction model 222 determined based on the predetermined initial resistance value and data for one month of use of a transparency 10 is shown in FIG. 6A.

At step 512, optionally, additional resistance data for another similar transparency (e.g., a same type of transparency used during similar operating conditions) collected at different times during use of the transparency can be received and added to the data set used to generate the linear regression line of the life prediction model. As in previous examples, received resistance values can be adjusted based on a temperature of the transparency when the data was collected to account for changes in resistance due to temperature differences.

At step 514, resistance change data for the transparency 10 is collected and analyzed periodically or continually during use of the transparency 10. Data representative of the resistance of the coating 30 of the transparency 10 at a particular time can be added to the data set used to generate the linear regression line.

At step 516, the processor 210 can be configured to update the life prediction model 222 based on newly received resistance data. The life prediction model 222 can be updated based on the received resistance change data for another similar transparency (received at step 512) and/or based on a plurality of new data points for resistance value of the coating 30 (received at step 514). The life prediction model 222 in FIG. 6B could be updated to include resistance data for the coating 30 collected during a second month that the transparency 10 is in use. More specifically, updating the life prediction model 222 comprises updating the linear regression line by recalculating the slope of the line, taking into account the new resistance data obtained at different times during use of the transparency 10. However, the initial resistance value (y-intercept value) and end-of-use values are experimentally determined constant values and do not change as the life prediction model 222 is updated. The life prediction model 222 can be updated each time that a new resistance value for the coating 30 is received by the processor 210. Alternatively, the slope of the regression line may be recalculated periodically, such as once a day, once a week, or once a month, to include all resistance data collected over a period of time.

At step 518, once the life prediction model 222 is updated, the processor 210 is configured to reevaluate the updated linear predictive model to determine an updated estimated remaining usable life for the coating 30 and transparency 10. As previously discussed, the updated estimated remaining usable life can be based on the present age of the transparency 10, the determined present resistance of the coating 30, and the predetermined end-of-use value. Evaluating the linear model 222 can include determining a present position on the updated linear regression line for the coating 30 and/or transparency 10 based on the measured resistance and the age of the coating 30 and/or transparency 10.

At step 520, the processor 210 can be configured to generate the output signal representative of the determined updated estimated remaining usable life. As in previous examples, the output signal can be provided from the processor 210 to the feedback device 224 (shown in FIG. 4), which can be configured to receive the generated output signal representative of the estimated remaining usable life from the processor 210 and provide icons, indications, and alerts based on the updated estimated remaining usable life. The icons, indications, and alerts can be used to schedule maintenance (e.g., repair or replacement) for the transparency 10. A displayed icon, indication, or alert for the updated estimated remaining usable life may include an indication that the life prediction model has been updated. The indication may also indicate whether the update resulted in an increase or decrease in the estimated remaining usable life of the transparency 10. Such an indication would help a user to appreciate that a change in estimated usable life is due to the updates to the life prediction model and not to some failure or event of the transparency 10.

At step 522, as in previous examples, the processor 210 can also be configured to automatically disconnect the power supply 124 from the coating 30 by moving the switch 218 (shown in FIG. 4) to an open position when the estimated remaining usable life is expired and/or when the estimated remaining usable life is below a predetermined threshold value.

Whereas particular embodiments of this invention have been described above for purposes of illustration, it will be evident to those skilled in the art that numerous variations of the details of the present invention may be made without departing from the invention as defined in the appended claims.

## Claims

1. A system (200) for predicting remaining usable life of an article comprising a resistive coating (30), the system (200) comprising:
computer-readable memory (228) comprising a predictive model (222) predicting changes in resistance of the resistive coating (30) over time determined based on a plurality of past resistance measurements for the resistive coating (30); and
a processor (210) electrically connected to the computer readable memory (228), the processor (210) configured to:
receive and process data representative of a sensed electrical property of the resistive coating (30) from a measurement sensor (214) electrically connected to the resistive coating (30) to determine a present resistance value for the coating;
receive information about a present age of the article and/or coating; and determine an estimated remaining usable life of the article by applying the received information about the present age of the coating and/or article, the determined present resistance value for the coating, and a predetermined end-of-use resistance value for the coating to the predictive model (222) of the computer-readable memory (228).

2. The system (200) of claim 1, further comprising the measurement sensor (214) electrically connected to the resistive coating (30) that senses the electrical property of the resistive coating (30).

3. The system (200) of claim 1 or claim 2, wherein the electrical property of the resistive coating (30) comprises resistance of the coating, electrical current flow through the coating, and/or voltage drop of the resistive coating; and/or
wherein the estimated remaining usable life of the article comprises an estimated time until substantial degradation of the resistive coating (30) occurs; and/or
wherein the predictive model (222) for resistance change over time is based on an initial resistance value for the resistive coating (30) and a slope determined by applying a linear regression algorithm to the past resistance measurements for the resistive coating.

4. The system (200) of any of claims 1 to 3, wherein the processor (210) is further configured to generate an output signal representative of the determined estimated remaining usable life, the system (200) further comprising a feedback device (224) configured to receive the generated output signal representative of the estimated remaining usable life from the processor (210) and provide an alert to a user indicating that maintenance of the article is required when the estimated remaining usable life is below a predetermined target value, wherein the feedback device (224) preferably is further configured to provide an alert to the user when the present resistance value is greater than the predetermined target value; and/or wherein the processor (210) is configured to periodically update the predictive model (222) of resistance change for the article based on determined resistance values for the coating obtained at different times; and/or
wherein the processor (210) is further configured to receive data representative of a temperature of the resistive coating (30) obtained at a time when the data used to determine the present resistance value was obtained, and to modify the present resistance value to account for the temperature of the resistive coating (30).

5. A system (200) for monitoring a condition of an article comprising a resistive coating (30), the system (30) comprising:
a measurement sensor electrically connected to the resistive coating (30) of the article configured to sense an electrical property of the resistive coating (30);
computer-readable memory (228) comprising a predictive model (222) predicting changes in resistance of the coating over time determined based on past resistance measurements for the resistive coating (30); and
a processor (210) electrically connected to the measurement sensor (214) and the computer-readable memory (228), the processor (210) being configured to:
receive information about a present age of the article and/or resistive coating (30);
receive the sensed electrical property of the resistive coating (30) from the measurement sensor (214);
determine a present resistance value of the resistive coating (30) based on the received sensed electrical property;
update the predictive model (222) based on the determined present resistance value and the received information about the present age of the article and/or coating;
evaluate a present condition of the resistive coating (30) by applying the determined present resistance value and a predetermined end-of-use resistance value to the updated predictive model (222) of resistance change for the article; and
determine an estimated remaining usable life of the article based on the evaluated present condition of the resistive coating (30).

6. The system (200) of claim 5, wherein the predictive model (222) comprises a regression line comprising: a y-intercept point determined based on an initial resistance of the coating prior to use; and a slope determined from the historical resistance measurements for the resistive coating (30), wherein preferably the processor (210) is configured to update the predictive model (222) by calculating an updated slope of the line based on the past resistance measurements for the resistive coating (30) and a plurality of additional resistance measurements for the coating.

7. The system (200) of claim 5 or claim 6, further comprising a temperature sensor (126) configured to measure a temperature of the resistive coating (30), wherein the processor (210) is configured to receive the measured temperature from the temperature sensor (126) and modify the determined resistance of the resistive coating (30) based on the measured temperature, to account for effects of changes in temperature on resistance of the resistive coating (30).

8. The system (200) of any of claims 1 to 7, wherein the article comprises a window or windshield comprising a transparency (10), such as a window or windshield of an aircraft comprising an aircraft transparency (4, 6); and/or wherein the predictive model (222) comprises a linear model; and/or wherein the predetermined end-of-use resistance value is an experimenttally determined resistance value for a substantially similar resistive coating (30) when substantial arcing occurred.

9. A windshield heating system (100) for a vehicle, comprising:
a transparency (10);
a resistive coating (30) on a portion of the transparency (10) configured to generate heat when an electrical current is applied to the resistive coating (30);
a power supply (124) connected to the resistive coating (30) configured to generate the electrical current that heats the resistive coating (30);
a measurement sensor (214) electrically connected to the resistive coating (30) configured to sense an electrical property of the resistive coating (30) when the electrical current is applied to the resistive coating (30); and
a processor (210) electrically connected to the power supply and to the measurement sensor (214), the processor (210) being configured to:
cause the power supply (124) to apply the electrical current from the power supply to the resistive coating (30);
receive data representative of the sensed electrical property of the resistive coating (30) from the measurement sensor (214) as the electrical current is applied to the resistive coating (30);
determine a present resistance value of the resistive coating (30) based on the received sensed electrical property;
evaluate a present condition of the resistive coating (30) by applying the determined present resistance value and a predetermined end-of-use resistance value to a predictive model (222) predicting changes in resistance of the resistive coating (30) over time determined based on historical resistance measurements for the resistive coating (30); and
determine an estimated remaining usable life of the transparency (10) based on the evaluated present condition of the resistive coating (30).

10. The windshield heating system (100) of claim 9, wherein the vehicle is an aircraft (2); and/or
wherein the transparency (10) comprises a first sheet (12), a second sheet (14), and an interlayer (16) between the first sheet (12) and the second sheet (14), wherein preferably the first sheet (12) and the second sheet (14) comprise plastic and/or glass, and the interlayer (16) comprises a plastic material that is softer than materials of the first sheet (12) and/or the second sheet (14), as measured by the ASTM D2240 standard test method; and/orwherein the resistive coating (30) comprises a metal oxide, a doped metal oxide, a reflective layer comprising a noble metal, a dielectric layer, and/or a metallic layer; and/or
wherein the processor (210) is configured to cause the power supply (124) to cease applying electrical current to the resistive coating (30) when the estimated remaining usable life has expired or is below a predetermined value, or
wherein the processor (210) is configured to automatically disconnect the power supply (124) from the resistive coating (30) when the estimated remaining usable life has expired or is below a predetermined value.

11. The windshield heating system (100) of claim 9 or claim 10, further comprising circuitry for applying the generated electrical current between the power supply (124) and the resistive coating (30), the circuitry comprising a bus bar assembly comprising bus bars (114, 118) physically and electrically coupled to the resistive coating (30).

12. A method of monitoring a condition of a transparency (10), comprising:
sensing an electrical property of a resistive coating (30) of the transparency (10) with a measurement sensor (214);
determining, with a processor (210), a present resistance value of the resistive coating (30) based on data representative of the sensed electrical property obtained by the measurement sensor (214);
updating a predictive model (222) of resistance change of the resistive coating (30) over time for the transparency (10) based on the determined present resistance value and a present age of the coating;
evaluating the present condition of the resistive coating (30) by applying the determined present resistance value and a predetermined end-of-use resistance value to the updated predictive model (222) of resistance change for the resistive coating (30); and
determining an estimated remaining usable life of the resistive coating (30) based on the evaluation of the evaluated present condition of the resistive coating (30).

13. The method of claim 12, wherein the transparency (10) is a transparency (10) of a windshield or window of a vehicle; and/or wherein the electrical property of the resistive coating (30) sensed by the measurement sensor (214) comprises resistance of the coating, electrical current flowing through the coating, and/or voltage drop of the resistive coating (30); and/or
wherein the estimated remaining usable life of the article comprises an estimated time until substantial degradation of the resistive coating (30) occurs; and/or
wherein the predictive model (222) comprises a linear model comprising a line comprising: a y-intercept point determined based on an initial resistance of the resistive coating (30) prior to use; and a slope determined from a plurality of previously collected resistance measurements for the coating, wherein updating the linear model preferably comprises calculating an updated slope of the line based on the plurality of previously collected resistance measurements for the coating and a plurality of additional resistance measurements for the coating; and/or
wherein the predetermined end-of-use resistance value is an experimentally determined resistance value for a substantially similar resistive coating when substantial arcing occurred.

14. The method of claim 12 or claim 13, further comprising receiving a temperature of the resistive coating (30) for a time when the present resistance value was determined, and modifying the present resistance value to account for the temperature of the resistive coating (30).

## Patentansprüche

1. Ein System (200) zum Vorhersagen der verbleibenden Verwendungsdauer eines Gegenstands umfassend eine Widerstandsbeschichtung (30), das System (200) umfassend:
einen computerlesbaren Speicher (228) umfassend ein Vorhersagemodell (222), welches Änderungen im Widerstand der Widerstandsbeschichtung (30) mit der Zeit vorhersagt, bestimmt basierend auf einer Vielzahl von zurückliegenden Widerstandsmessungen für die Widerstandsbeschichtung (30); und
einen Prozessor (210), der elektrisch mit dem computerlesbaren Speicher (228) verbunden ist, wobei der Prozessor (210) konfiguriert ist, um:
Daten, die repräsentativ für eine gemessene elektrische Eigenschaft der Widerstandsbeschichtung (30) sind, von einem Messsensor (214), der elektrisch mit der Widerstandsbeschichtung (30) verbunden ist, zu empfangen und zu verarbeiten, um einen vorliegenden Widerstandswert für die Beschichtung zu bestimmen;
Informationen über ein vorliegendes Alter des Gegenstands und/oder der Beschichtung zu empfangen; und
eine geschätzte verbleibende Verwendungsdauer des Gegenstands durch Anwenden der empfangenen Informationen über das vorliegende Alter der Beschichtung und/oder des Gegenstands, dem bestimmten vorliegenden Widerstandswert der Beschichtung und einem festgelegten Widerstandswert für das Ende der Verwendung der Beschichtung auf das Vorhersagemodell (222) des computerlesbaren Speichers (228) zu bestimmen.

2. Das System (200) gemäß Anspruch 1, des Weiteren umfassend den Messsensor (214) elektrisch verbunden mit der Widerstandsbeschichtung (30), der die elektrische Eigenschaft der Widerstandsbeschichtung (30) misst.

3. Das System (200) gemäß Anspruch 1 oder Anspruch 2, wobei die elektrische Eigenschaft der Widerstandsbeschichtung (30) einen Widerstand der Beschichtung, einen elektrischen Stromfluss durch die Beschichtung und/oder einen Spannungsabfall der Widerstandsbeschichtung umfasst; und/oder
wobei die geschätzte verbleibende Verwendungsdauer des Gegenstands eine geschätzte Zeit umfasst, bis ein wesentlicher Abbau der Widerstandsbeschichtung (30) stattfindet; und/oder
wobei das Vorhersagemodell (222) für die Widerstandsänderung mit der Zeit auf einem anfänglichen Widerstandswert für die Widerstandsbeschichtung (30) und einer Steigung, bestimmt durch Anwenden eines linearen Regressionsalgorithmus auf die vergangenen Widerstandsmessungen für die Widerstandsbeschichtung, beruht.

4. Das System (200) gemäß irgendeinem der Ansprüche 1 bis 3, wobei der Prozessor (210) des Weiteren konfiguriert ist, ein Ausgabesignal, welches repräsentativ für die bestimmte geschätzte verbleibende Verwendungsdauer ist, zu generieren, das System (200) des Weiteren umfassend eine Rückmeldeeinheit (224), konfiguriert um das erzeugte Ausgabesignal, welches für die geschätzte verbleibende Verwendungsdauer repräsentativ ist, von dem Prozessor (210) zu empfangen und einen Alarm an einen Nutzer bereitzustellen, welcher anzeigt, dass eine Wartung des Gegenstands erforderlich ist, wenn die geschätzte verbleibende Verwendungsdauer unterhalb eines festgelegten Zielwerts ist, wobei die Rückmeldeeinheit (224) vorzugsweise des Weiteren konfiguriert ist, einen Alarm an den Benutzer bereitzustellen, wenn der vorliegende Widerstandswert größer als der vorbestimmte Zielwert ist; und/oder
wobei der Prozessor (210) konfiguriert ist, in periodischen Abständen das Vorhersagemodell (222) der Widerstandsänderung für den Gegenstand, basierend auf den bestimmten Widerstandswerten für die Beschichtung, erhalten zu unterschiedlichen Zeitpunkten, zu aktualisieren; und/oder wobei der Prozessor (210) des Weiteren konfiguriert ist, Daten, welche repräsentativ für eine Temperatur der Widerstandsbeschichtung (30) sind, die zu einem Zeitpunkt erhalten wurden, zu welchem die Daten, welche genutzt wurden, um den vorliegenden Widerstandswert zu bestimmen, zu empfangen und den vorliegenden Widerstandswert anzupassen, um der Temperatur der Widerstandsbeschichtung (30) Rechnung zu tragen.

5. Ein System (200) zur Überwachung eines Zustands eines Gegenstands umfassend eine Widerstandsbeschichtung (30), das System (30) umfassend:
einen Messsensor, elektrisch mit der Widerstandsbeschichtung (30) des Gegenstands verbunden und konfiguriert, um eine elektrische Eigenschaft der Widerstandsbeschichtung (30) zu messen;
einen computerlesbaren Speicher (228) umfassend ein Vorhersagemodell (222), welches Änderungen im Widerstand der Beschichtung mit der Zeit vorhersagt, bestimmt basierend auf zurückliegenden Widerstandsmessungen der Widerstandsbeschichtung (30); und
einen Prozessor (210) elektrisch mit dem Messsensor (214) und dem computerlesbaren Speicher (228) verbunden, wobei der Prozessor (210) konfiguriert ist, um:
Informationen über ein vorliegendes Alter des Gegenstands und/oder der Widerstandsbeschichtung (30) zu empfangen;
die gemessene elektrische Eigenschaft der Widerstandsbeschichtung (30) von dem Messsensor (214) zu empfangen;
einen vorliegenden Widerstandswert der Widerstandsbeschichtung (30) basierend auf der empfangenen gemessenen elektrischen Eigenschaft zu bestimmen;
das Vorhersagemodell (222) zu aktualisieren, basierend auf dem bestimmten vorliegenden Widerstandswert und der empfangenen Information über das vorliegende Alter des Gegenstands und/oder der Beschichtung;
einen vorliegenden Zustand der Widerstandsbeschichtung (30) durch Anwenden des bestimmten vorliegenden Widerstandswerts und eines festgelegten Widerstandswerts für das Ende der Verwendung auf das aktualisierte Vorhersagemodell (222) der Widerstandsänderung des Gegenstands zu bewerten; und
eine geschätzte verbleibende Verwendungsdauer des Gegenstands basierend auf dem abgeschätzten vorliegenden Zustand der Widerstandsbeschichtung (30) zu bestimmen.

6. Das System (200) gemäß Anspruch 5, wobei das Vorhersagemodell (222) eine Regressionsgerade umfassend: einen y-Schnittpunkt, bestimmt basierend auf einem ursprünglichen Widerstand der Beschichtung vor der Verwendung; und eine Steigung, bestimmt aus den zurückliegenden Widerstandsmessungen der Widerstandsbeschichtung (30), wobei der Prozessor (210) vorzugsweise konfiguriert ist, das Vorhersagemodell (222) durch Berechnen einer aktualisierten Steigung der Geraden basierend auf den zurückliegenden Widerstandsmessungen der Widerstandsbeschichtung (30) und einer Vielzahl von zusätzlichen Widerstandsmessungen für die Beschichtung zu aktualisieren.

7. Das System (200) gemäß Anspruch 5 oder 6, des Weiteren umfassend einen Temperatursensor (126), konfiguriert, um eine Temperatur der Widerstandsbeschichtung (30) zu messen, wobei der Prozessor (210) konfiguriert ist, um die gemessene Temperatur von dem Temperatursensor (126) zu empfangen und den bestimmten Widerstand der Widerstandsbeschichtung (30) basierend auf der gemessenen Temperatur zu ändern, um Auswirkungen von Veränderungen in der Temperatur auf den Widerstand der Widerstandsbeschichtung (30) Rechnung zu tragen.

8. Das System (200) gemäß irgendeinem der Ansprüche 1 bis 7, wobei der Gegenstand ein Fenster oder eine Windschutzscheibe umfassend eine Scheibe (10), wie beispielsweise ein Fenster oder eine Windschutzscheibe eines Flugzeugs umfassend eine Flugzeugscheibe (4, 6) umfasst; und/oder wobei das Vorhersagemodell (222) ein lineares Modell umfasst; und/oder wobei der festgelegte Widerstandswert zum Ende der Verwendungsdauer ein experimentell bestimmter Widerstandswert für eine im Wesentlichen ähnliche Widerstandsbeschichtung (30) ist, als nennenswerter Funkenschlag auftrat.

9. Ein Windschutzscheibenheizsystem (100) für ein Fahrzeug umfassend:
eine Scheibe (10);
eine Widerstandsbeschichtung (30) auf einem Teil der Scheibe (10), konfiguriert um Wärme zu erzeugen, wenn ein elektrischer Strom an die Widerstandsbeschichtung (30) angelegt wird;
eine Stromquelle (124), verbunden mit der Widerstandsbeschichtung (30) und konfiguriert, um den elektrischen Strom zu generieren, der die Widerstandsbeschichtung (30) erwärmt;
einen Messsensor (214), elektrisch mit der Widerstandsbeschichtung (30) verbunden und konfiguriert, um eine elektrische Eigenschaft der Widerstandsbeschichtung (30) zu messen, wenn der elektrische Strom an die Widerstandsbeschichtung (30) angelegt ist; und
einen Prozessor (210), elektrisch mit der Stromquelle und dem Messsensor (214) verbunden, wobei der Prozessor (210) konfiguriert ist, um:
die Stromquelle (124) zu veranlassen, den elektrischen Strom von der Stromquelle an die Widerstandsbeschichtung (30) anzulegen;
Daten, die repräsentativ für die gemessene elektrische Eigenschaft der Widerstandsbeschichtung (30) sind, von dem Messsensor (214) zu empfangen, während der elektrische Strom an die Widerstandsbeschichtung (30) angelegt wird;
einen vorliegenden Widerstandswert der Widerstandsbeschichtung (30) basierend auf der empfangenen gemessenen elektrischen Eigenschaft zu bestimmen;
einen vorliegenden Zustand der Widerstandsbeschichtung (30) durch Anwenden des bestimmten vorliegenden Widerstandswerts und eines festgelegten Widerstandswerts für das Ende der Verwendungsdauer auf ein Vorhersagemodell (222), welches Veränderungen in dem Widerstand der Widerstandsbeschichtung (30) über die Zeit vorhersagt, bestimmt basierend auf zurückliegenden Widerstandsmessungen der Widerstandsbeschichtung (30), zu beurteilen; und
Bestimmen einer geschätzten verbleibenden Verwendungsdauer der Scheibe (10), basierend auf dem abgeschätzten vorliegenden Zustand der Widerstandsbeschichtung (30).

10. Das Windschutzscheibenheizsystem (100) gemäß Anspruch 9, wobei das Fahrzeug ein Flugzeug ist; und/oder
wobei die Scheibe (10) eine erste Lage (12), eine zweite Lage (14) und eine Zwischenschicht (16) zwischen der ersten Lage (12) und der zweiten Lage (14) umfasst, wobei vorzugsweise die erste Lage (12) und die zweite Lage (14) Plastik und/oder Glas umfassen und die Zwischenschicht (16) ein Kunststoffmaterial umfasst, welches weicher als die Materialien der ersten Lage (12) und/oder der zweiten Lage (14) ist, wie gemäß dem ASTM D2240-Standard-Testverfahren bestimmt; und/oder wobei die Widerstandsbeschichtung (30) ein Metalloxid, ein dotiertes Metalloxid, eine reflektierende Schicht umfassend ein Edelmetall, eine dielektrische Schicht und/oder eine metallische Schicht umfasst; und/oder wobei der Prozessor (210) konfiguriert ist, die Stromversorgung (124) zu veranlassen, ein Anlegen von elektrischem Strom an die Widerstandsbeschichtung (30) zu beenden, wenn die geschätzte verbleibende Verwendungsdauer abgelaufen ist oder unterhalb eines vorbestimmten Werts ist, oder
wobei der Prozessor (210) konfiguriert ist, die Stromversorgung (124) automatisch von der Widerstandsbeschichtung (30) zu trennen, wenn die geschätzte verbleibende Verwendungsdauer abgelaufen ist oder unterhalb eines vorbestimmten Werts ist.

11. Das Windschutzscheibenheizsystem (100) gemäß Anspruch 9 oder Anspruch 10, des Weiteren umfassend:
einen Stromkreis zum Anlegen des erzeugten elektrischen Stroms zwischen der Stromquelle (124) und der Widerstandsbeschichtung (30),
wobei der Stromkreis eine Sammelschienenanordnung umfassend Sammelschienen (114, 118), physikalisch und elektrisch mit der Widerstandsbeschichtung (30) verbunden, umfasst.

12. Ein Verfahren zum Überwachen eines Zustands einer Scheibe (10) umfassend:
Messen einer elektrischen Eigenschaft einer Widerstandsbeschichtung (30) der Scheibe (10) mit einem Messsensor (214);
Bestimmen eines vorliegenden Widerstandswerts der Widerstandsbeschichtung (30), basierend auf Daten, die repräsentativ für die gemessene elektrische Eigenschaft, erhalten durch den Messsensor (214), sind, mit einem Prozessor (210);
Aktualisieren eines Vorhersagemodells (222) der Widerstandsänderung der Widerstandsbeschichtung (30) mit der Zeit für die Scheibe (10), basierend auf dem bestimmten vorliegenden Widerstandswert und einem vorliegenden Alter der Beschichtung;
Bewerten des vorliegenden Zustands der Widerstandsbeschichtung (30) durch Anwenden des bestimmten vorliegenden Widerstandswerts und eines vorbestimmten Widerstandswerts für das Ende der Verwendungsdauer auf das aktualisierte Vorhersagemodell (222) der Widerstandsänderung der Widerstandsbeschichtung (30); und
Bestimmen einer geschätzten verbleibenden Verwendungsdauer der Widerstandsbeschichtung (30), basierend auf der Bewertung des abgeschätzten vorliegenden Zustands der Widerstandsbeschichtung (30).

13. Das Verfahren gemäß Anspruch 12, wobei die Scheibe (10) eine Scheibe (10) einer Windschutzscheibe oder eines Fensters eines Fahrzeugs ist; und/oder
wobei die elektrische Eigenschaft der Widerstandsbeschichtung (30), gemessen durch den Messsensor (214), einen Widerstand der Beschichtung, elektrischen Strom, der durch die Beschichtung fließt, und/oder einen Spannungsabfall der Widerstandsbeschichtung (30) umfasst; und/oder
wobei die geschätzte verbleibende Verwendungsdauer des Gegenstands eine geschätzte Zeit umfasst, bis ein wesentlicher Abbau der Widerstandsbeschichtung (30) auftritt; und/oder
wobei das Vorhersagemodell (222) ein lineares Modell umfassend eine Gerade umfassend: einen Y-Schnittpunkt, bestimmt basierend auf einem anfänglichen Widerstand der Widerstandsbeschichtung (30) vor der Nutzung; und einer Steigung bestimmt aus einer Vielzahl von zuvor gesammelten Widerstandsmessungen für die Beschichtung, wobei ein Aktualisieren des linearen Modells vorzugsweise ein Berechnen einer aktualisierten Steigung der Geraden, basierend auf der Vielzahl der zuvor gesammelten Widerstandsmessungen für die Beschichtung und einer Vielzahl von zusätzlichen Widerstandsmessungen für die Beschichtung umfasst; und/oder
wobei der vorbestimmte Widerstandswert für das Ende der Verwendungsdauer ein experimentell bestimmter Widerstandswert für eine im Wesentlichen ähnliche Widerstandsbeschichtung ist, als nennenswerter Funkenschlag auftrat.

14. Das Verfahren gemäß Anspruch 12 oder Anspruch 13, des Weiteren umfassend ein Empfangen einer Temperatur der Widerstandsbeschichtung (30) für einen Zeitpunkt, an dem der vorliegende Widerstandswert bestimmt wurde und Anpassen des vorliegenden Widerstandswerts, um der Temperatur der Widerstandsbeschichtung (30) Rechnung zu tragen.

## Revendications

1. Système (200) permettant de prédire la durée d'utilisation restante d'un article comprenant un revêtement résistif (30), le système (200) comprenant :
une mémoire informatique (228) comprenant un modèle prédictif (222) prédisant des variations de résistance du revêtement résistif (30) dans le temps déterminées d'après une pluralité de mesures de résistance passées pour le revêtement résistif (30) ; et
un processeur (210) connecté électriquement à la mémoire informatique (228), le processeur (210) étant configuré pour :
recevoir et traiter des données représentatives d'une propriété électrique détectée du revêtement résistif (30) provenant d'un capteur de mesure (214) connecté électriquement au revêtement résistif (30) pour déterminer une valeur de résistance présente pour le revêtement ;
recevoir une information sur l'âge présent de l'article et/ou du revêtement ; et
déterminer une durée d'utilisation restante estimée de l'article en appliquant l'information reçue sur l'âge présent du revêtement et/ou de l'article, la valeur de résistance présente déterminée pour le revêtement, et une valeur de résistance de fin d'utilisation prédéterminée pour le revêtement au modèle prédictif (222) de la mémoire informatique (228).

2. Système (200) selon la revendication 1, comprenant en outre le capteur de mesure (214) connecté électriquement au revêtement résistif (30) qui détecte la propriété électrique du revêtement résistif (30).

3. Système (200) selon la revendication 1 ou 2, dans lequel la propriété électrique du revêtement résistif (30) comprend la résistance du revêtement, la circulation de courant électrique dans le revêtement, et/ou la chute de tension du revêtement résistif ; et/ou
dans lequel la durée d'utilisation restante estimée de l'article comprend un temps estimé jusqu'à ce que la dégradation substantielle du revêtement résistif (30) se produise ; et/ou
dans lequel le modèle prédictif (222) pour la variation de résistance dans le temps est basé sur une valeur de résistance initiale pour le revêtement résistif (30) et une pente déterminée en appliquant un algorithme de régression linéaire aux mesures de résistance passées pour le revêtement résistif.

4. Système (200) selon l'une quelconque des revendications 1 à 3, dans lequel le processeur (210) est configuré en outre pour produire un signal de sortie représentatif de la durée d'utilisation restante estimée déterminée, le système (200) comprenant en outre un dispositif de rétroaction (224) configuré pour recevoir du processeur (210) le signal de sortie produit représentatif de la durée d'utilisation restante estimée et pour fournir une alerte à un utilisateur indiquant qu'une maintenance de l'article est nécessaire lorsque la durée d'utilisation restante estimée est inférieure à une valeur cible prédéterminée, dans lequel le dispositif de rétroaction (224) est de préférence configuré en outre pour fournir une alerte à l'utilisateur lorsque la valeur de résistance présente est supérieure à la valeur cible prédéterminée ; et/ou dans lequel le processeur (210) est configuré pour actualiser périodiquement le modèle prédictif (222) de variation de résistance pour l'article en fonction de valeurs de résistance déterminées pour le revêtement obtenues à différents moments ;
et/ou dans lequel le processeur (210) est configuré en outre pour recevoir des données représentatives d'une température du revêtement résistif (30) obtenue à un instant où les données utilisées pour déterminer la valeur de résistance présente ont été obtenues, et pour modifier la valeur de résistance présente afin de prendre en compte la température du revêtement résistif (30).

5. Système (200) permettant de surveiller l'état d'un article comprenant un revêtement résistif (30), le système (30) comprenant :
un capteur de mesure connecté électriquement au revêtement résistif (30) de l'article configuré pour détecter une propriété électrique du revêtement résistif (30) ;
une mémoire informatique (228) comprenant un modèle prédictif (222) prédisant des variations de résistance du revêtement dans le temps déterminées d'après des mesures de résistance passées pour le revêtement résistif (30) ; et
un processeur (210) connecté électriquement au capteur de mesure (214) et à la mémoire informatique (228), le processeur (210) étant configuré pour :
recevoir une information sur l'âge présent de l'article et/ou du revêtement résistif (30) ;
recevoir du capteur de mesure (214) la propriété électrique détectée du revêtement résistif (30) ;
déterminer une valeur de résistance présente du revêtement résistif (30) basée sur la propriété électrique détectée reçue ;
actualiser le modèle prédictif (222) en fonction de la valeur de résistance présente déterminée et de l'information reçue sur l'âge présent de l'article et/ou du revêtement ;
évaluer un état présent du revêtement résistif (30) en appliquant la valeur de résistance présente déterminée et une valeur de résistance de fin d'utilisation prédéterminée au modèle prédictif actualisé (222) de variation de résistance pour l'article ; et
déterminer une durée d'utilisation restante estimée de l'article en se basant sur l'état présent évalué du revêtement résistif (30).

6. Système (200) selon la revendication 5, dans lequel le modèle prédictif (222) comprend une droite de régression comprenant : un point sur l'axe y déterminé d'après une résistance initiale du revêtement avant utilisation ; et une pente déterminée à partir des mesures de résistance passées pour le revêtement résistif (30), dans lequel de préférence le processeur (210) est configuré pour actualiser le modèle prédictif (222) en calculant une pente actualisée de la droite en se basant sur les mesures de résistance passées pour le revêtement résistif (30) et sur une pluralité de mesures de résistance additionnelles pour le revêtement.

7. Système (200) selon la revendication 5 ou 6, comprenant en outre un capteur de température (126) configuré pour mesurer une température du revêtement résistif (30), dans lequel le processeur (210) est configuré pour recevoir la température mesurée fournie par le capteur de température (126) et pour modifier la résistance déterminée du revêtement résistif (30) en se basant sur la température mesurée, afin de prendre en compte les effets des variations de température sur la résistance du revêtement résistif (30).

8. Système (200) selon l'une quelconque des revendications 1 à 7, dans lequel l'article comprend une fenêtre ou un pare-brise comprenant un vitrage (10), comme une fenêtre ou un pare-brise d'un avion comprenant un vitrage d'avion (4, 6) ; et/ou dans lequel le modèle prédictif (222) comprend un modèle linéaire ; et/ou dans lequel la valeur de résistance de fin d'utilisation prédéterminée est une valeur de résistance déterminée expérimentalement pour un revêtement résistif sensiblement similaire (30) quand un arc électrique substantiel s'est produit.

9. Système de chauffage de pare-brise (100) pour véhicule, comprenant :
un vitrage (10) ;
un revêtement résistif (30) sur une partie du vitrage (10) configuré pour produire de la chaleur quand un courant électrique est appliqué au revêtement résistif (30) ;
une alimentation (124) connectée au revêtement résistif (30) configurée pour produire le courant électrique qui fait chauffer le revêtement résistif (30) ;
un capteur de mesure (214) connecté électriquement au revêtement résistif (30) configuré pour détecter une propriété électrique du revêtement résistif (30) quand le courant électrique est appliqué au revêtement résistif (30) ; et
un processeur (210) connecté électriquement à l'alimentation et au capteur de mesure (214), le processeur (210) étant configuré pour :
faire appliquer par l'alimentation (124) le courant électrique de l'alimentation au revêtement résistif (30) ;
recevoir des données représentatives de la propriété électrique détectée du revêtement résistif (30) provenant du capteur de mesure (214) pendant que le courant électrique est appliqué au revêtement résistif (30) ;
déterminer une valeur de résistance présente du revêtement résistif (30) en se basant sur la propriété électrique détectée reçue ;
évaluer un état présent du revêtement résistif (30) en appliquant la valeur de résistance présente déterminée et une valeur de résistance de fin d'utilisation prédéterminée à un modèle prédictif (222) prédisant les variations de résistance du revêtement résistif (30) dans le temps déterminées d'après des mesures de résistance passées pour le revêtement résistif (30) ; et
déterminer une durée d'utilisation restante estimée du vitrage (10) en se basant sur l'état présent évalué du revêtement résistif (30).

10. Système de chauffage de pare-brise (100) selon la revendication 9, dans lequel le véhicule est un avion (2) ; et/ou
dans lequel le vitrage (10) comprend une première feuille (12), une deuxième feuille (14) et une couche intermédiaire (16) entre la première feuille (12) et la deuxième feuille (14), dans lequel de préférence la première feuille (12) et la deuxième feuille (14) comprennent du plastique et/ou du verre, et la couche intermédiaire (16) comprend une matière plastique qui est plus molle que les matériaux de la première feuille (12) et/ou de la deuxième feuille (14), selon la méthode d'essai de la norme ASTM D2240 ; et/ou dans lequel le revêtement résistif (30) comprend un oxyde métallique, un oxyde métallique dopé, une couche réfléchissante comprenant un métal noble, une couche diélectrique, et/ou une couche métallique ; et/ou
dans lequel le processeur (210) est configuré pour faire cesser par l'alimentation (124) l'application d'un courant électrique au revêtement résistif (30) lorsque la durée d'utilisation restante estimée est expirée ou est inférieure à une valeur prédéterminée, ou
dans lequel le processeur (210) est configuré pour déconnecter automatiquement l'alimentation (124) du revêtement résistif (30) lorsque la durée d'utilisation restante estimée est expirée ou est inférieure à une valeur prédéterminée.

11. Système de chauffage de pare-brise (100) selon la revendication 9 ou 10, comprenant en outre un circuit permettant d'appliquer le courant électrique produit entre l'alimentation (124) et le revêtement résistif (30), le circuit comprenant un ensemble de barres omnibus comprenant des barres omnibus (114, 118) couplées physiquement et électriquement au revêtement résistif (30).

12. Procédé de surveillance de l'état d'un vitrage (10) comprenant les étapes suivantes :
détecter une propriété électrique d'un revêtement résistif (30) du vitrage (10) avec un capteur de mesure (214) ;
déterminer, avec un processeur (210), une valeur de résistance présente du revêtement résistif (30) en se basant sur des données représentatives de la propriété électrique détectée obtenues par le capteur de mesure (214) ;
actualiser un modèle prédictif (222) de variation de résistance du revêtement résistif (30) dans le temps pour le vitrage (10) en se basant sur la valeur de résistance présente déterminée et sur un âge présent du revêtement ;
évaluer l'état présent du revêtement résistif (30) en appliquant la valeur de résistance présente déterminée et une valeur de résistance de fin d'utilisation prédéterminée au modèle prédictif actualisé (222) de variation de résistance pour le revêtement résistif (30) ; et
déterminer une durée d'utilisation restante estimée du revêtement résistif (30) en se basant sur l'évaluation de l'état présent évalué du revêtement résistif (30).

13. Procédé selon la revendication 12, dans lequel le vitrage (10) est un vitrage (10) d'un pare-brise ou d'une fenêtre de véhicule ; et/ou
dans lequel la propriété électrique du revêtement résistif (30) détectée par le capteur de mesure (214) comprend la résistance du revêtement, la circulation de courant électrique dans le revêtement, et/ou la chute de tension du revêtement résistif (30) ; et/ou
dans lequel la durée d'utilisation restante estimée de l'article comprend un temps estimé jusqu'à ce que la dégradation substantielle du revêtement résistif (30) se produise ; et/ou
dans lequel le modèle prédictif (222) comprend un modèle linéaire comprenant une droite comprenant : un point sur l'axe y déterminé d'après une résistance initiale du revêtement résistif (30) avant utilisation ; et une pente déterminée à partir d'une pluralité de mesures de résistance collectées précédemment pour le revêtement, dans lequel l'actualisation du modèle linéaire comprend de préférence le calcul d'une pente actualisée de la droite basée sur la pluralité de mesures de résistance collectées précédemment pour le revêtement et sur une pluralité de mesures de résistance additionnelles pour le revêtement ; et/ou
dans lequel la valeur de résistance de fin d'utilisation prédéterminée est une valeur de résistance déterminée expérimentalement pour un revêtement résistif sensiblement similaire quand un arc électrique substantiel s'est produit.

14. Procédé selon la revendication 12 ou 13, comprenant en outre le fait de recevoir une température du revêtement résistif (30) à un instant où la valeur de résistance présente a été déterminée, et de modifier la valeur de résistance présente afin de prendre en compte la température du revêtement résistif (30).
